(19) **Europäisches Patentamt / European Patent Office / Office européen des brevets**

(11) **EP 1 974 512 B1**

(12) # EUROPEAN PATENT SPECIFICATION

(45) Date of publication and mention
of the grant of the patent:
**22.08.2018 Bulletin 2018/34**

(21) Application number: **07716730.2**

(22) Date of filing: **17.01.2007**

(51) Int Cl.:
*H04L 25/02* (2006.01)   *H04L 25/03* (2006.01)

(86) International application number:
**PCT/US2007/001233**

(87) International publication number:
**WO 2007/084562 (26.07.2007 Gazette 2007/30)**

(54) **RECURSIVE COMPUTATION OF A CHANNEL MATRIX FOR A MIMO EQUALIZER**

REKURSIVE BERECHNUNG EINER KANALMATRIX FÜR EINEN MIMO-ENTZERRER

CALCUL RÉCURSIF D'UNE MATRICE DE CANAL POUR ÉGALISEUR MIMO

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.01.2006   US 759453 P**
**14.09.2006   US 521182**

(43) Date of publication of application:
**01.10.2008   Bulletin 2008/40**

(73) Proprietor: **Marvell World Trade Ltd.**
**St. Michael 14027 (BB)**

(72) Inventor: **SARRIGEORGIDIS, Konstantinos**
**Sunnyvale, CA 94087 (US)**

(74) Representative: **Grünecker Patent- und
Rechtsanwälte
PartG mbB
Leopoldstraße 4
80802 München (DE)**

(56) References cited:
**EP-A- 1 566 917         US-A1- 2005 185 738
US-A1- 2005 249 303**

- **LOK TIING TIE ET AL: "Decoupled Maximum Likelihood Multiuser Channel Estimation for Asynchronous DS-CDMA System" IEEE INTERNATIONAL SYMPOSIUM ON SPREAD SPECTRUM TECHNIQUES AND APPLICATIONS, 30 August 2004 (2004-08-30), pages 92-96, XP010754915 IEEE: PISCATAWAY, NJ, USA ISBN: 0-7803-8408-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present disclosure relates to channel estimation in a wireless communication system.

BACKGROUND

Some multiple input, multiple output (MIMO) wireless communication systems can estimate channel conditions, or gains, in the communication path between the transmitting and receiving antennas. The channel estimation process can include transmitting known training symbols, receiving the known training symbols, and processing the received symbols to estimate the channel conditions. The estimation is based on differences between the known training symbols and the received symbols. Information regarding the channel conditions can then be used to program coefficients of an equalizer of the receiver. The equalizer then compensates for the channel conditions.

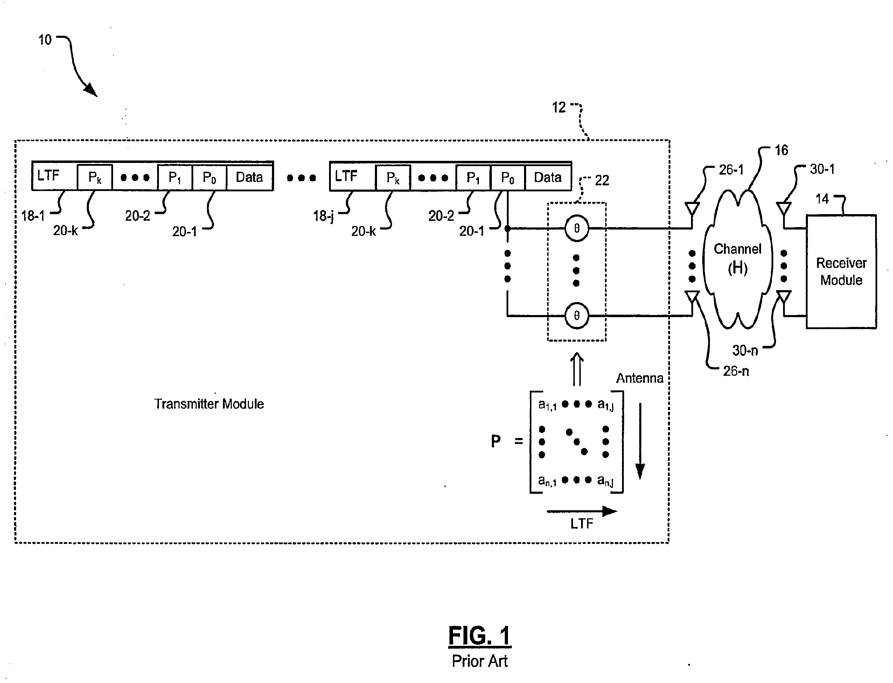

Referring now to FIG. 1, an example is shown of a MIMO communication system 10 that complies with the Institute of Electrical and Electronics Engineers (IEEE) 802.11n specification. A transmitter module 12 communicates with a receiver module 14 via a wireless communication channel 16. A matrix H represents signal gains through channel 16.

Transmitter module 12 periodically generates a plurality of long training fields (LTFs) 18-1, ..., 18-j, referred to collectively as LTFs 18. Each LTF 18 includes a plurality of training symbols 20-1, ..., 20-k, referred to collectively as training symbols 20. A multiplier module 22 multiplies each training symbol 20 by a corresponding column of a preamble steering matrix P. A number of rows n of matrix P corresponds with a number of transmit antennas 26-1, ..., 26-n, collectively referred to as antennas 26. The number of columns j of matrix P corresponds with the number of LTFs 18. Matrix P assures the orthogonality of training symbols 20 as they are transmitted from antennas 26. Matrix P has a condition number of 1, i.e. cond(P) = 1.

Receiver module 14 includes receiver antennas 30-1, ..., 30-n, collectively referred to as antennas 30, that receive the training symbols via channel 16. After receiving all of the training symbols, receiver module 14 generates matrix H based on known training symbols 20, matrix P, and the received training symbols. Receiver module 14 can then use matrix H to adjust coefficients of an internal equalization module for signals from antennas 30. It is generally desirable for receiver module 14 to generate matrix H as quickly as possible.

A sample estimation of matrix H will now be described. Assume that n=3 and j=4. Transmitter module 12 then sends 4 LTFs 18 and matrix P is a 3x4 matrix

$$\mathbf{P} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}.$$

The effective MIMO channel estimated at receiver module 14 is given by $H_{est} = HP \Rightarrow H = H_{est}P^{-1}$, where $H_{est}$ represents an estimation of matrix H. For the data associated with each LTF 18 the transmitter-to-receiver communication model can be described by $y = H_{est}P^{-1}x + n$, where x represents transmitted data symbols. The ZF solution is applied to the matrix $H_{est}P^{-1}$.

If the matrix P were not used, $y = Hx + n \Rightarrow \hat{x} = R^{-1}Q^{\cdot}y$, where, y. represents received data symbols. With matrix P, $y = H_{est}P^{-1}x + n$. Receiver module 14 uses each LTF 18 to estimate a column of matrix $H_{est}$. Matrix H can therefore be estimated by waiting until all columns have been estimated and then estimating the matrix$H_{est}P^{-1}$. Receiver module 14 can then perform orthogonal-triangular decomposition (QR) on $H_{est}P^{-1}$, i.e $QR(H_{est}P^{-1})$. However, the computational density increases to the order of $n^3$, i.e. $O(n^3)$. To meet the processing latency the hardware burden would also increase based on $O(n^3)$.

The effect of matrix P will now be described to shed light on the above equations. Let $H_{est} = QR$. Without matrix P the equalized vector is given by

$$\hat{x} = \frac{1}{diag(R^{-1}R^{-\cdot})}R^{-1}Q^{\cdot}y,$$

$$W_{\parallel} = \frac{1}{\text{diag}(R^{-1}R^{-*})}.$$

where With matrix P the equalized vector is given by:

$$\hat{x} = \frac{1}{\text{diag}((RP^{-1})^{-1}(RP^{-1})^{-*})}PR^{-1}Q^{*}y,$$

$$W_{\parallel} = \frac{1}{\text{diag}((RP^{-1})^{-1}(RP^{-1})^{-*})}.$$

where The equivalent matrix $RP^{-1}$ is a full matrix and it is difficult to compute its inverse for an nxn communication system.

Lok Tiing Tie et al.: "Decoupled Maximum Likelihood Multiuser Channel Estimation for Asynchronous DS-CDMA System", IEEE International Symposium on Spread Spectrum Techniques and Applications, August 30, 2004, pages 92-96 relates to a decoupled maximum likelihood channel estimation scheme is proposed using recursive matrix computation for asynchronous code-division multiple access communication systems. The estimation is obtained using training sequence. A recursive algorithm is used to find the estimator so as to spread the computational time over each processing window. In particular, the solutions of the estimator algorithm are solved recursively by using the method of indirect matrix inversion. A signal ak(t) is transmitted through a multipath channel with M distinct paths. A spreading matrix S is defined and applied to the signal. In the recursive matrix computation, an adaptive algorithm is used to calculate the channel gain by solving a linear equation, wherein a symmetry property of two correlation matrices allows to reduce the computation by allowing updating the correlation matrices immediately once the training symbol is received instead of waiting until all the symbols are received.

US 2005/185738 A1 relates to a method for payload-based channel estimation of a wireless channel which begins by receiving a frame via the wireless communication channel. The frame includes a training sequence, a frame information section, and a plurality of time sequential data payload sections. As the frame is being received, the method continues by determining a channel estimation based on the training sequence. The method continues as the frame is being received by determining a channel estimation of a data payload section of the plurality of time sequential data payload sections to produce a payload channel estimation. The method continues as the frame is being received by updating the channel estimation based on the payload channel estimation to produce an updated channel estimation.

US 2005/249303 A1 relates to a method and system enhancing transmission efficiency by decreasing regions of reference signals which are attached to transmit packets from a transmitter during bidirectional SVD-MIMO communication. The transmitter transmits user data following a reference signal. At the other end, the receiver acquires a channel matrix, based on the reference signal attached preceding the user data, receives the user data, while weighting the data with receive weights derived from the channel matrix, adaptively estimates the channel matrix H as long as the user data is being received, and obtains transmit weights V' for transmitting user data in the reverse direction from an adaptively estimated channel matrix H'. The singular value decomposition of the channel information matrix H is expressed by the equation H = UDVH where the matrix V of antenna weighting factors at the transmitter and the antenna weight matrix U at the receiver are unitary matrices. The transmitter transmits sub-carriers weighted by the matrix V of transmit antenna weighting factors and the receiver receives the sub-carriers that are then weighted by the matrix UH of receive antenna weighting factors. In order to allow more frequent feedback from the receiver to the transmitter if the conditions of the channels vary to a great extent, as the transmitter and the receiver move, the receiver feeds back the transmit weight matrix V to the transmitter and the transmitter then transmits a reference signal weighted with the matrix V to the receiver before the receiver acquires the channel matrix again. Given that the channel matrix is H, the receiver can acquire a channel matrix HV from the reference signal weighted by V.

EP 1 566 917 A relates to adaptive MIMO systems. It discloses an adaptive MIMO communication system comprising a MIMO transmitter, a MIMO receiver, and having a feedback path from said receiver to said transmitter. The decomposition of the MIMO channel estimate matrix can be used as a precursor to both determining a channel condition or metric and decoding received data, and decomposition of the channel estimate matrix can proceed in parallel with a determination of the channel estimation matrix itself. MIMO decoding generally relies upon some form of factorization of the matrix channel estimate, such as QR factorization or SVD factorization, to estimate the transmitted symbols. Apart from a noise term, a received signal vector y is given by y = Q.R.c, where c is a transmitted signal vector. Q can be easily inverted as its transpose is the inverse from definition. As the channel estimate and channel metric computation are performed only once per block of transmitted symbols, the MIMO decoder can use a straightforward back-substitution method with quantization for estimating each symbol in the block, whilst simplifying the channel metric computation process. In order to improve the speed of operation of the receiver, the QR or other decomposition may be performed in parallel with the channel estimation procedure. For example, the channel estimation may be performed column-by-column and the QR decomposition procedure may also allow decomposition on a column-by-column basis.

SUMMARY

The object of the present invention is solved by the subject matter of the independent claims.
Embodiments are given in the dependent claims.
A receiver module includes an input that receives a data message from a wireless communication channel. The data message has a plurality of training fields and data. A channel estimator module recursively estimates a matrix H that represents the channel based on the plurality of training fields. The recursive estimation is performed as the plurality of training fields are being received. An equalizer module applies coefficients to the data based on the matrix H.
In other features the channel estimator module begins the recursive estimation upon receiving a first one of the training fields and finishes the recursive estimation upon receiving a final one of the plurality of training fields. The channel estimator module estimates the matrix H based on a matrix P. the plurality of training symbols are processed in accordance with the matrix P prior to being transmitted to the receiver module. The recursive estimation of matrix H includes recursively estimating a matrix $H_{est}$ based on the plurality of training fields and estimating matrix H based on an inverse of matrix P and a final value of the matrix $H_{est}$. Each iteration of the recursive estimation of matrix $H_{est}$ occurs after receiving a corresponding one of the plurality of training fields.
In other features the receiver module further includes a plurality of FFT modules that convert the data from time domain signals to frequency domain signals. Respective outputs of the plurality of FFT modules communicate with respective inputs of the equalizer module. The receiver module includes a Viterbi decoder module that generates data symbols based on the frequency domain signals communicated from an output of the equalizer module. The plurality of training fields are compliant with IEEE 802.11n.
In other features a transceiver module includes the receiver module and further includes a transmitter module. The transmitter module generates training symbols that are to be included in the plurality of training fields and includes a multiplier module that multiplies the training symbols by a matrix P. The matrix P has a condition number equal to 1.
A method of operating a receiver includes receiving a data message from a wireless communication channel. The data message has a plurality of training fields and data. The method includes recursively estimating a matrix H that represents the channel based on the plurality of training fields. The recursive estimating is performed as the plurality of training fields are being received. The method also includes applying coefficients to the data based on the matrix H.
In other features the recursive estimating step begins upon receiving a first one of the training fields and finishes upon receiving a final one of the plurality of training fields. The matrix H is based on a matrix P and the plurality of training symbols are processed in accordance with the matrix P prior to being transmitted. The recursive estimation of matrix H includes recursively estimating a matrix $H_{est}$ based on the plurality of training fields and estimating matrix H based on an inverse of matrix P and a final value of the matrix $H_{est}$. Each iteration of the recursive estimation of matrix $H_{est}$ occurs after receiving a corresponding one of the plurality of training fields.
In other features the method includes converting the data from time domain signals to frequency domain signals. The method includes communicating the frequency domain signals to the step of applying coefficients. The method includes generating data symbols based on frequency domain signals that are output from the step of applying coefficients. The plurality of training fields are compliant with IEEE 802.11n.
In other features the method is adapted to operating a transceiver module by including transmitting a wireless signal over the wireless communication channel. The transmitting step includes generating training symbols that are to be included in the plurality of training fields and multiplying the training symbols by a matrix P. The matrix P has a condition number equal to 1.
A receiver module includes input means for receiving a data message from a wireless communication channel. The data message has a plurality of training fields and data. Channel estimator means recursively estimate a matrix H that represents the channel based on the plurality of training fields. The recursive estimation is performed as the plurality of training fields are being received. Equalizer means apply coefficients to the data based on the matrix H.
In other features the channel estimator means begins the recursive estimation upon receiving a first one of the training fields and finishes the recursive estimation upon receiving a final one of the plurality of training fields. The channel estimator means estimates the matrix H based on a matrix P. The plurality of training symbols are processed in accordance with the matrix P prior to being transmitted to the receiver module. The recursive estimation of matrix H includes recursively estimating a matrix $H_{est}$ based on the plurality of training fields and estimating matrix H based on an inverse of matrix P and a final value of the matrix $H_{est}$. Each iteration of the recursive estimation of matrix $H_{est}$ occurs after receiving a corresponding one of the plurality of training fields.
In other features the receiver module includes FFT means for converting the data from time domain signals to frequency domain signals. Respective outputs of the FFT means communicate with respective inputs of the equalizer means. The receiver module includes a Viterbi decoder module that generates data symbols based on frequency domain signals communicated from an output of the equalizer module. The plurality of training fields are otherwise compliant with IEEE 802.11n.

In other features a transceiver module includes the receiver and further includes transmitter means for transmitting a wireless signal over the wireless communication channel. The transmitter means generates training symbols that are to be included in the plurality of training fields and includes multiplier means for multiplying the training symbols by a matrix P. The matrix P has a condition number equal to 1.

In still other features, a computer program executed by a processor associated with a receiver includes receiving a data message from a wireless communication channel. The data message has a plurality of training fields and data. The computer program includes recursively estimating a matrix H that represents the channel based on the plurality of training fields. The recursive estimating is performed as the plurality of training fields are being received. The computer program also includes applying coefficients to the data based on the matrix H.

In other features the recursive estimating step begins upon receiving a first one of the training fields and finishes upon receiving a final one of the plurality of training fields. The matrix H is based on a matrix P and the plurality of training symbols are processed in accordance with the matrix P prior to being transmitted. The recursive estimation of matrix H includes recursively estimating a matrix $H_{est}$ based on the plurality of training fields and estimating matrix H based on an inverse of matrix P and a final value of the matrix $H_{est}$. Each iteration of the recursive estimation of matrix $H_{est}$ occurs after receiving a corresponding one of the plurality of training fields.

In other features the computer program includes converting the data from time domain signals to frequency domain signals. The computer program includes communicating the frequency domain signals to the step of applying coefficients. The computer program includes generating data symbols based on frequency domain signals that are output from the step of applying coefficients. The plurality of training fields are compliant with IEEE 802.11n.

In other features the computer program is adapted to operating a transceiver module by including transmitting a wireless signal over the wireless communication channel. The transmitting step includes generating training symbols that are to be included in the plurality of training fields and multiplying the training symbols by a matrix P. The matrix P has a condition number equal to 1.

In still other features, the systems and methods described above are implemented by a computer program executed by one or more processors. The computer program can reside on a computer readable medium such as but not limited to memory, non-volatile data storage and/or other suitable tangible storage mediums.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

BRIEF DESCRIPTION OF THE DRAWINGS

The present disclosure will become more fully understood from the detailed description and the accompanying drawings, wherein:

FIG. 1 is a functional block diagram of a multiple input, multiple output (MIMO) communication system according to the prior art;

FIG. 2 is a functional block diagram of a MIMO communication system that includes a receiver that employs a recursive channel estimation method;

FIG. 3 is a functional block diagram of a MIMO transceiver that includes the receiver of FIG. 2;

FIG. 4 is a data diagram of a prior art data message that is transmitted by a transmitter module of the communication system of FIG. 2;

FIG. 5 is a flowchart of the recursive channel estimation method;

FIG. 6A is a functional block diagram of a high definition television;

FIG. 6B is a functional block diagram of a vehicle control system;

FIG. 6C is a functional block diagram of a cellular phone;

FIG. 6D is a functional block diagram of a set top box; and

FIG. 6E is a functional block diagram of a media player.

DETAILED DESCRIPTION

The following description is merely exemplary in nature and is in no way intended to limit the disclosure, its application, or uses. For purposes of clarity, the same reference numbers will be used in the drawings to identify similar elements. As used herein, the term module, circuit and/or device refers to an Application Specific Integrated Circuit (ASIC), an electronic circuit, a processor (shared, dedicated, or group) and memory that execute one or more software or firmware programs, a combinational logic circuit, and/or other suitable components that provide the described functionality. As used herein, the phrase at least one of A, B, and C should be construed to mean a logical (A or B or C), using a non-exclusive logical or. It should be understood that steps within a method may be executed in different order without altering the principles of the present disclosure.

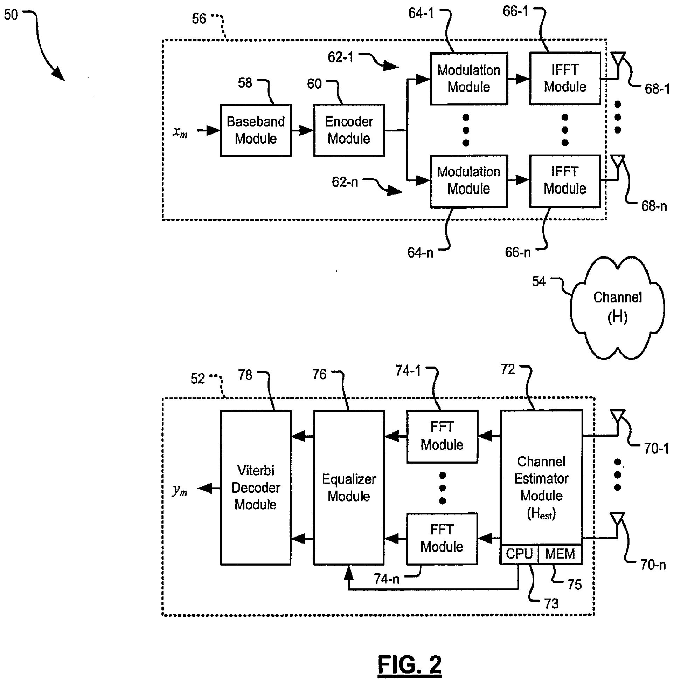

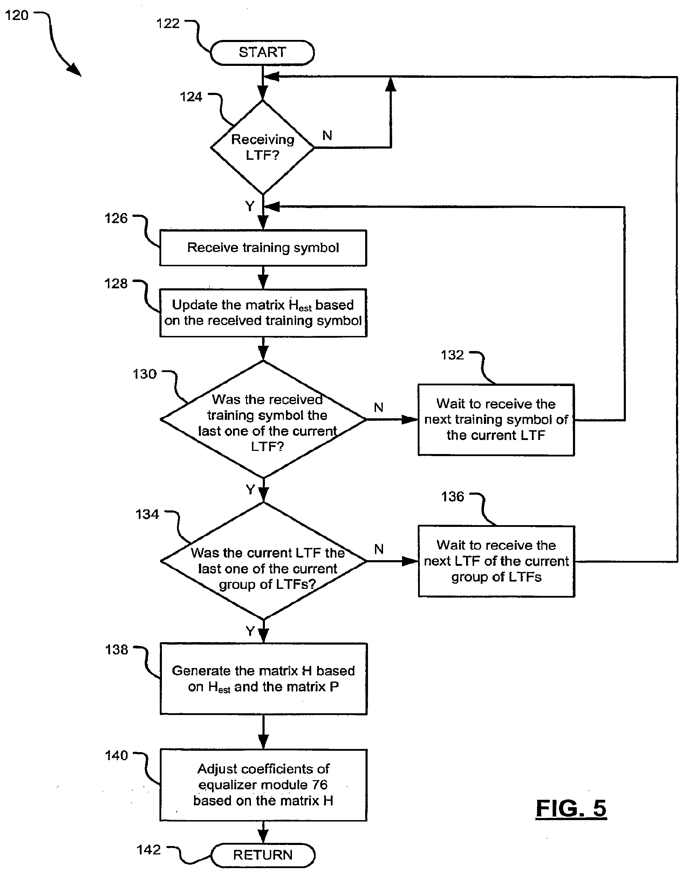

Referring now to FIG. 2, a functional block diagram is shown of a MIMO communication system 50. Communication system 50 includes a receiver module 52 that employs a recursive channel estimation method (shown in FIG. 5). The recursive channel estimation method estimates conditions in a wireless communication channel 54. The recursive estimation method begins with a first long training sequence that is sent by a transmitter module 56. The recursive estimation method ends by generating a channel estimation matrix H when the last long training sequence has been received. Since the recursive estimation method develops a basis for generating matrix H while the long training sequences are being received, instead of starting after the long training sequences have been received, the recursive estimation method can generate matrix H faster than previously known methods. The matrix H can then be used to perform channel equalization in receiver module 52 to compensate for the effects of communication channel 54.

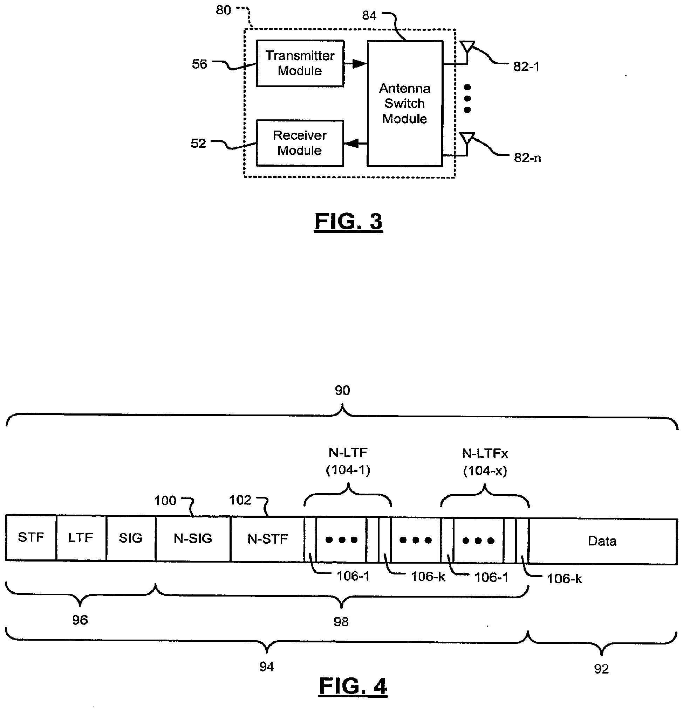

Communication system 50 will now be described in pertinent part. A baseband module 58 generates data messages based on m streams of incoming data. Baseband module 58 communicates the data messages (shown in FIG. 4) to an encoder module 60. The data messages include respective long training fields that are compliant with IEEE 802.11n. Encoder module 60 encodes the long training fields into n data streams based on the matrix P, which is shown in FIG. 1. Encoder module 60 communicates the n data streams to n respective transmit channels 62-1, ..., 62-n, which are referred to collectively as transmit channels 62. Each transmit channel 62 includes a respective modulation module 64 that modulates its respective data stream, such as with quadrature-amplitude modulation (QAM), and communicates the modulated data stream to a respective inverse fast-Fourier transform (IFFT) module 66. IFFT modules 66 convert their respective data streams from a frequency domain signal to a time domain signal. IFFT modules 66 communicate the time domain signals to respective radio frequency (RF) transmitters that are represented by antennas 68.

The transmitted data streams propagate through communication channel 54. Communication channel 54 perturbs the transmitted data streams due to phenomena such as reflections, signal attenuation, and so forth. The perturbations can be represented by matrix H.

Receiver module 52 includes n RF receivers that are represented by antennas 70-1, ..., 70-n. The RF receivers receive the transmitted data streams and communicate the perturbed time domain signals to a channel estimator module 72. Channel estimator module 72 estimates matrix H based on matrix P and the long training fields that are included in the received data streams. In some embodiments channel estimator module 72 includes a processor 73 and associated memory 75 for storing and/or executing the recursive channel estimation methods that are described below.

Channel estimator module 72 communicates the n received data streams to n respective fast-Fourier transform (FFT) modules 74 and adjusts gains of an equalizer module 76. FFT modules 74 convert the time-domain data streams to frequency-domain data streams and communicate them to equalizer module 76. Equalizer module 76 compensates the respective data streams based on the gains and communicates the compensated gains to a Viterbi decoder module 78. Viterbi decoder module 78 decodes the n data streams to generate received data streams $y_m$.

Referring now to FIG. 3, a functional block diagram is shown of a transceiver 80 that includes transmitter module 56 and receiver module 52. Transceiver 80 can communicate with other transceivers 80 via antennas 82-1, ..., 82-n. An antennas switch module 84 selectively connects antennas 82 to transmitter module 56 or receiver module 52 based on whether transceiver 80 is transmitting or receiving.

Referring now to FIG. 4, a data diagram is shown of an IEEE 802.11n data message 90. Data message 90 includes data 92 and a preamble 94 that contains a plurality of training fields. Preamble 94 is divided into a first portion 96 and a second portion 98. First portion 96 may be used by legacy systems, e.g. non-MIMO, IEEE 802.11 communication systems. Second portion 98 includes a signal filed field 100, a short training field 102, and x long training fields (LTFs) 104-1, ..., 104-x, where x is an integer. Each LTF 104 includes k training symbols 106 or tones. Short training field 102 is generally used by receiver module 52 to establish symbol timing of data message 90. Channel estimator module 72 uses LTFs 104 and their k respective training symbols 106 to estimate matrix H based on methods that are described below.

Referring now to FIG. 5, a method 120 is shown for estimating matrix H. Method 120 can be executed by channel estimator module 72. In some embodiments method 120 can be implemented as a computer program or firmware that is stored in memory 75 and executed by processor 73.

Control enters at a block 122 and proceeds to decision block 124. In decision block 124 control determines whether an LTF 104 is being received. If not then control returns to block 122. If an LTF 104 is being received then control branches from decision block 124 to block 126. In block 126 control receives a training symbol 106 that is associated with the current LTF 104. Control then proceeds to block 128 and updates a matrix $H_{est}$, which is described below in more detail, based on the current training symbol 106. Control then proceeds to decision block 130 and determines whether the current training symbol 106 was the last training symbol 106 of the present LTF 104. If not then control branches to block 132 and waits for the next training symbol 106 of the current LTF 104. When the next training symbol 106 is received control returns to block 126 and repeats the aforementioned steps for the new training symbol 106. On the other hand, if the training symbol 106 in decision block 130 was the last training symbol 106 of the present LTF 104 then control branches to decision block 134.

In decision block 134 control determines whether the current LTF 104 was the last LTF 104 (i.e. LTF 104-x) of the current group of LTFs 104. If not then control branches to block 136 and waits for the next LTF 104 to begin before returning to block 126. On the other hand, if the current LTF 104 was the last LTF 104-x then control branches from decision block 134 to block 138. In block 138 control generates matrix H based on matrix $H_{est}$ and matrix P. Control then proceeds to block 140 and adjusts the gains of equalizer module 76 based on matrix H. Control then returns to other processes via termination block 142.

As channel estimator module 72 executes method 120 it performs distributed QR across LTFs 104. That is, $QR(H_{est})$. Computational density therefore increases as $O(n^2)$ and the processing latency of associated hardware and/or processor 73 would increase by about $O(n^2)$. This represents an improvement, e.g. reduced need for processing power, over the prior art. Example estimations of matrix $H_{est}$ will now be provided for various MIMO dimensions of communications system 50.

## 2X2 AND 2X3 MIMO CASES

In 2x2 and 2x3 MIMO cases the equalized vector is given by

$$\hat{x} = \frac{1}{diag(P_{2x2}R_{2x2}^{-1}R_{2x2}^{-*}P_{2x2}^{T})} P_{2x2}R_{2x2}^{-1}Q^{*}y$$

It can be seen that

$$\hat{x} = \begin{bmatrix} \dfrac{r_{11}^2 r_{22}^2}{r_{22}^2 + \|r_{11}+r_{12}\|^2} & 0 \\ 0 & \dfrac{r_{11}^2 r_{22}^2}{r_{22}^2 + \|r_{11}-r_{12}\|^2} \end{bmatrix} \begin{bmatrix} 1 & -1 \\ 1 & 1 \end{bmatrix} \begin{bmatrix} \dfrac{1}{r_{11}} & -\dfrac{r_{12}}{r_{11}r_{22}} \\ 0 & \dfrac{1}{r_{22}} \end{bmatrix} Q^{*}y,$$

where

$$W_{\parallel} = \begin{bmatrix} \dfrac{r_{11}^2 r_{22}^2}{r_{22}^2 + \|r_{11}+r_{12}\|^2} & 0 \\ 0 & \dfrac{r_{11}^2 r_{22}^2}{r_{22}^2 + \|r_{11}-r_{12}\|^2} \end{bmatrix},$$

$$P_{2x2} = \begin{bmatrix} 1 & -1 \\ 1 & 1 \end{bmatrix},$$

and

$$R_{2x2}^{-1} = \begin{bmatrix} \dfrac{1}{r_{11}} & -\dfrac{r_{12}}{r_{11}r_{22}} \\ 0 & \dfrac{1}{r_{22}} \end{bmatrix}.$$

## 4X4 SPATIAL-MULTIPLEXING (SM) MIMO CASE

For a general nxn MIMO communication system 50 the equalized vector is given by

$$\hat{x}_n = \frac{1}{diag(P_n R_n^{-1} R_n^{-*} P_n^T)} P_n R_n^{-1} Q_n^* y$$

where $H_{est,n} = Q_n R_n$.

Methods are known in the art for recursively solving the $Q_n^* y$ term of the above equation. Recursive computation of the $P_n R_n^{-1}$ and $\underline{w_{ll,n}} = 1./diag(P_n R_n^{-1} R_n^{-*} P_n^T)$ terms of the above equation will now be described.

4X4 SM MIMO CASE - SUBSTREAM SIGNAL-TO NOISE RATIO (SNR) RECURSION

Let $\underline{w_{ll,n}} = 1./diag(P_{nxn} R_{nxn}^{-1} R_{nxn}^{-*} P_{nxn}^T)$. It can be seen that for $1 \leq j < n$ the $j^{th}$ element of the $w_{ll}$ vector for n streams can be recursively computed as follows:

$$\frac{1}{w_{ll,n}^j} = \frac{1}{w_{ll,n-1}^j} + k_j \text{ where } k_j = (P_{nxn} \underline{v} \underline{v}^* P_{nxn}^T)_{jj}, \; R_{nxn}^{-1} = \begin{bmatrix} R_{n-1xn-1}^{-1} & \underline{v} \\ \underline{0} & \end{bmatrix}.$$

For j=n, $w_{ll,n}^n = \frac{1}{\lambda_n + k_n}$ where $\lambda_n = P(n,1:n-1) R_{n-1}^{-1} R_{n-1}^{-*} P(n,1:n-1)^T$.

A proof of the immediately preceding equations will now be provided.

$$R_{nxn}^{-1} = \begin{bmatrix} R_{n-1xn-1}^{-1} & \underline{v} \\ \underline{0} & \end{bmatrix}$$

$$diag(P_{nxn} R_{nxn}^{-1} R_{nxn}^{-*} P_{nxn}^T) =$$

$$diag(P_n \begin{bmatrix} R_{n-1}^{-1} & \underline{v} \\ \underline{0} & \end{bmatrix} \begin{bmatrix} R_{n-1}^{-1} & \underline{v} \\ \underline{0} & \end{bmatrix}^* P_n^T)$$

$$= diag(P_n (\begin{bmatrix} R_{n-1}^{-1} R_{n-1}^{-*} & \underline{0} \\ \underline{0} & \end{bmatrix} + \underline{v} \underline{v}^*) P_n^T)$$

$$= diag(P_{n-1} R_{n-1}^{-1} R_{n-1}^{-*} P_{n-1}^T, P_{(n,1:n-1)} R_{n-1}^{-1} R_{n-1}^{-*} P_{(n,1:n-1)}^T) +$$

$$diag(P_n \underline{v} \underline{v}^* P_n^T)$$

4x4 SM MIMO CASE - PROCESSING THE 2ND LTF 104

Compute $R_{2x2}$.

Compute $R_{2x2}^{-1} = \begin{bmatrix} 1/ & -r_{12}/r_{11}r_{22} \\ 0 & 1/r_{22} \end{bmatrix}$.

Compute $1/w_{ll,1} = (r_{22}^2 + \|r_{11} + r_{12}\|^2)/r_{11}^2 r_{22}^2$.

Compute $1/w_{ll,2} = (r_{22}^2 + \|r_{11} - r_{12}\|^2)/r_{11}^2 r_{22}^2$.

Let $\lambda = 1/w_{ll,2}$.

## 4x4 SM MIMO CASE - PROCESSING THE 3$^{RD}$ LTF 104

Update the inverse of the triangular matrix based on

$$R_{3x3} = \begin{bmatrix} R_{2x2} & [r_{13} & r_{23} & r_{33}]^T \\ \underline{0} & \end{bmatrix} \cdot R_{3x3}^{-1} = \begin{bmatrix} R_{2x2}^{-1} & [\rho_1 & \rho_2 & \rho_3]^T \\ \underline{0} & \end{bmatrix}$$

where $\rho_1 = (r_{12}r_{23} - r_{13}r_{22})/r_{11}r_{22}r_{33}$ $\rho_2 = -r_{23}/r_{22}r_{33}$ $\rho_3 = 1/r_{33}$.
Update the substream SNRs based on

$$1/w_{ll,1} \rightarrow 1/w_{ll,1} + \left\| \rho_1 - \rho_2 + \rho_3 \right\|^2$$

$$1/w_{ll,2} \rightarrow 1/w_{ll,2} + \left\| \rho_1 + \rho_2 - \rho_3 \right\|^2$$

$$1/w_{ll,3} \rightarrow \lambda + \left\| \rho_1 + \rho_2 + \rho_3 \right\|^2.$$

Update the lamda factor based on

$$\lambda = 1/w_{ll,1} + 1/w_{ll,1} - 1/w_{ll,3} + 8real(\rho_2)\rho_3.$$

## 4x4 SM MIMO CASE - PROCESSING THE 4$^{TH}$ LTF 104

Update the inverse of the triangular matrix based on

$$R_{4x4} = \begin{bmatrix} R_{3x3} & [r_{14} & r_{24} & r_{34} & r_{44}]^T \\ \underline{0} & \end{bmatrix} R_{4x4} = \begin{bmatrix} R_{3x3} & [r_{14} & r_{24} & r_{34} & r_{44}]^T \\ \underline{0} & \end{bmatrix}$$

where

$$\rho_1 = (r_{33}(r_{12}r_{24} - r_{14}r_{22}) - (r_{12}r_{23} - r_{13}r_{22})r_{34})/r_{11}r_{22}r_{33}r_{44},$$
$$\rho_2 = (r_{34}r_{23} - r_{24}r_{33})/r_{22}r_{33}r_{44}, \quad \rho_3 = -r_{33}/r_{33}r_{44}, \quad \rho_4 = 1/r_{44}$$

Update the substream SNR based on

$$1/w_{ll,2} \rightarrow 1/w_{ll,2} + \left\| \rho_1 + \rho_2 - \rho_3 + \rho_4 \right\|^2$$

$$1/w_{ll,3} \rightarrow 1/w_{ll,3} + \left\| \rho_1 + \rho_2 + \rho_3 - \rho_4 \right\|^2$$

$$1/w_{ll,4} \rightarrow \lambda + \left\| -\rho_1 + \rho_2 + \rho_3 + \rho_4 \right\|^2$$

$$1/w_{ll,4} \rightarrow \lambda + \left\| -\rho_1 + \rho_2 + \rho_3 + \rho_4 \right\|^2.$$

Compute their inverses and store them in a memory that can be included in channel estimator module 72.

3x3 SM MIMO CASE - PROCESSING THE 4$^{TH}$ LTF 104

The 3x3 MIMO case employs a non-square matrix P. For 3 streams transmitter module 56 sends 4 LTFs 104 and employs matrix P of

$$\mathbf{P}_3 = \begin{bmatrix} 1 & -1 & 1 & 1 \\ 1 & 1 & -1 & 1 \\ 1 & 1 & 1 & -1 \end{bmatrix}.$$

Channel estimator module 72 estimates channel matrix $H_{est3x4}$ and the real matrix is $H = H_{est3x4} P_{3x4}^{\perp} \cdot$. The received vector can be based on $y = H_{est3x4} P_{3x4}^{\perp} x = Hx$ .

A distributed solution may also be employed by working directly with $H_{est3x4}$ without forming H. In the distributed solution let

$$H_{est3x4} = QR_{3x4}$$

and

$$H_{est3x4} = \begin{bmatrix} H_{est3x3} & h_4 \end{bmatrix}.$$

Then $Q^* H_{est3x4} = \lfloor R \ Q^* h_4 \rfloor$ where $QR = H_{est3x3}$.

In some embodiments the equalized vector can be based on

$$\hat{x} = (H_{est,3x4} P_{3x4}^{\perp})^{\perp} y .$$

It can be seen that

$$\underline{\hat{x}} = P_1^{-1} \underline{z} - \mu \underline{v}$$

where $\underline{u} = R^{-1} Q^* h_4$, and $\mu = [1\ -1\ 1] \underline{z}$. The vector v is based on

$$\underline{v} = k P_1^{-1} \underline{u}$$

where $\underline{u} = R^{-1} Q^* h_4$. The scalar k is based on

$$k = 1/(1 + \begin{bmatrix} 1 & -1 & 1 \end{bmatrix} \underline{u}).$$

The matrix $P_1{}^{-1}$ is based on

$$P_1^{-1} = 2 \begin{bmatrix} 1 & -1 & 0 \\ 1 & 0 & -1 \\ 0 & 1 & 1 \end{bmatrix}.$$

A proof of the immediately preceding equations will now be provided.

A solution is given by $\hat{x} = (H_{est,3x4} P_{3x4}^{\perp})^{-1} y$. Let $P_{3x4}^{\perp} = \begin{bmatrix} P_1 \\ p_1 \end{bmatrix}$ and write the matrix as

$$(H_{est,3x4} P_{3x4}^{\perp})^{-1} = [H_{est,3x3} P_1 + h_4 p_1]^{-1} = [QRP_1 + h_4 p_1]^{-1}$$

$$= P_1^{-1} R^{-1} Q^* - \frac{P_1^{-1} R^{-1} Q^* h_4 p_1 P_1^{-1} R^{-1} Q^*}{1 + p_1 P_1^{-1} R^{-1} Q^* h_4} = [I - \frac{v p_1}{1 + p_1 v}] P_1^{-1} R^{-1} Q^*$$

where $v = P_1^{-1} R^{-1} Q^* h_4$.

$$P_1^{-1} = 2 \begin{bmatrix} 1 & -1 & 0 \\ 1 & 0 & -1 \\ 0 & 1 & 1 \end{bmatrix}, \quad p_1 P_1^{-1} = \begin{bmatrix} 1 & -1 & -1 \end{bmatrix} \quad .$$

## 3x3 SM MIMO CASE - SOLUTION FOR $W_{ll}$

Channel estimator module 72 computes

$$W_{ll} = 1/((H_{est,3x4} P_{3x4}^{\perp})^* (H_{est,3x4} P_{3x4}^{\perp}))^{-1}$$

based on terms of $v = k P_1^{-1} \cdot R^{-1} Q^* h_4$, and $R^{-1} R^{-*}$. Let this matrix be

$$R^{-1} R^{-*} = \begin{bmatrix} I_{11} + jQ_{11} & I_{21} - jQ_{21} & I_{31} - jQ_{31} \\ I_{21} + jQ_{21} & I_{22} + jQ_{22} & I_{32} - jQ_{32} \\ I_{31} + jQ_{31} & I_{32} + jQ_{32} & I_{33} + jQ_{33} \end{bmatrix}$$

and during LTFs 104 compute

$$S_1 = 4(I_{11} - 2I_{21} + I_{22})$$

$$S_2 = 4(I_{11} - 2I_{31} + I_{33})$$

$$S_3 = 4(I_{22} + 2I_{32} + I_{33})$$

$$S = (I_{11} + I_{22} + I_{33}) - 2(I_{21} + I_{31} - I_{32})$$

$$S_4 = I_{11} - 2I_{21} + I_{22} - I_{31} + I_{32} + j(Q_{11} + Q_{22} + Q_{31} - Q_{32})$$

$$S_5 = I_{11} - I_{21} + I_{32} - 2I_{31} + I_{33} + j(Q_{11} + Q_{21} + Q_{32} + Q_{33})$$

$$S_6 = I_{21} - I_{22} + I_{31} - 2I_{32} - I_{33} + j(Q_{21} - Q_{22} + Q_{31} - Q_{33})$$

It can be seen that

$$W_{ll1} = 1/(S_1 + S\|v_1\|^2 - 4\,real(S_4 v_1^{\cdot}))$$

$$W_{ll2} = 1/(S_2 + S\|v_2\|^2 - 4\,real(S_5 v_2^{\cdot}))$$

$$W_{ll3} = 1/(S_3 + S\|v_3\|^2 - 4\,real(S_6 v_3^{\cdot}))$$

and $\underline{v} = kP_1^{-1}\underline{u}$.

Proof of the above solution for $W_{ll}$ will now be provided. Let

$$H = [QR \quad h_4]P_{3x4}^{\perp} \Rightarrow Q^{\cdot}H = [R \quad Q^{\cdot}h_4]P_{3x4}^{\perp} =$$
$$R(P_1 + \underline{u}p_1), \quad \underline{u} = R^{-1}Q^{\cdot}h_4$$

Then

$$(H^{\cdot}H)^{-1} = (P_1 + \underline{u}p_1)^{-1}R^{-1}R^{-\cdot}(P_1^T + p_1^T\underline{u}^{\cdot})^{-1} =$$
$$(I - \frac{P_1^{-1}\underline{u}p_1}{1+[1 \quad -1 \quad -1]\underline{u}})P_1^{-1}R^{-1}R^{-\cdot}P_1^{-T}(I - \frac{p_1^T\underline{u}^{\cdot}P_1^{-T}}{1+[1 \quad -1 \quad -1]\underline{u}}) =$$
$$(P_1^{-1} - v[1 \quad -1 \quad -1])R^{-1}R^{-\cdot}(P_1^{-T} - [1 \quad -1 \quad -1]^T v^{\cdot}) =$$
$$P_1^{-1}R^{-1}R^{-\cdot}P_1^{-T} + v[1 \quad -1 \quad -1]R^{-1}R^{-\cdot}[1 \quad -1 \quad -1]^T v^{\cdot}$$
$$- 2\,real(P_1^{-1}R^{-1}R^{-\cdot}[1 \quad -1 \quad -1]v^{\cdot})$$

$$v = k P_1^{-1}R^{-1}Q^{\cdot}h_4 \; .$$

Channel estimator module 72 still needs to recursively update $R^{-1}R^{-\ast}$ after determining $\underline{v} = kP_1^{-1}\underline{u}$ as described above. At a time n let

$$R_n^{-1} = [R_{n-1}^{-1} \quad \rho]$$

and apply the following identity

$$R_n^{-1}R_n^{-\cdot} = R_{n-1}^{-1}R_{n-1}^{-\cdot} + \rho\rho^{\cdot} \; .$$

For example,

$$R_{3x3}^{-1} = \begin{bmatrix} R_{2x2}^{-1} & [\rho_1 & \rho_2 & \rho_3]^T \\ \underline{0} & \end{bmatrix}$$

$$\rho_1 = (r_{12}r_{23} - r_{13}r_{22})/r_{11}r_{22}r_{33} \quad \rho_2 = -r_{23}/r_{22}r_{33} \quad \rho_3 = 1/r_{33} \; .$$

3x3 SM MIMO CASE - PROCESING THE 1ST LTF 104

Channel estimator module 72 performs first column nulling by computing

$$R_1^{-1} = 1/r_{11}.$$

### 3x3 SM MIMO CASE - PROCESING THE 2ND LTF 104

Channel estimator module 72 performs second column QR processing based on

$$R_{2x2}^{-1} = \begin{bmatrix} R_1^{-1} & [\rho_1 & \rho_2]^T \\ \underline{0} & \end{bmatrix}$$

where $\rho_1 = -r_{12}/r_{11}r_{22}$, and $\rho_2 = 1/r_{22}$. Channel estimator module 72 then computes $\|\rho_1\|^2, \|\rho_2\|^2$, $\rho_1 \, \rho_1\rho_2^{\cdot}$ and updates $R^{-1}R^{-*}$ based on

$$R_{2x2}^{-1}R_{2x2}^{-*} = \begin{bmatrix} 1/r_{11} + \|\rho_1\|^2 & \rho_1\rho_2^{\cdot} \\ \rho_1^{\cdot}\rho_2 & \|\rho_2\|^2 \end{bmatrix}.$$

### 3x3 SM MIMO CASE - PROCESING THE 3RD LTF 104

Channel estimator module 72 performs third column QR processing by recursively updating

$$R_{3x3}^{-1} = \begin{bmatrix} R_{2x2}^{-1} & [\rho_1 & \rho_2 & \rho_3]^T \\ \underline{0} & \end{bmatrix}$$

where $\rho_1 = (r_{12}r_{23} - r_{13}r_{22}) / r_{11}r_{22}r_{33}$ $\rho_{2=} - r_{23} / r_{22}r_{33}$ $\rho_{3=}1/r_{33}$. Channel estimator module 72 can then compute

$$\|\rho_1\|^2, \|\rho_2\|^2, \|\rho_2\|^2, \rho_1\rho_2^*, \rho_1\rho_3^*, \rho_2\rho_3^*$$

and update $R^{-1} R^{-\cdot}$ based on

$$R_{3x3}^{-1}R_{3x3}^{-*} = R_{2x2}^{-1}R_{2x2}^{-*} + \rho\rho^{\cdot}.$$

Channel estimator module 72 can then compute the sums

$$S_1 = 4(I_{11} - 2I_{21} + I_{22})$$

$$S_2 = 4(I_{11} - 2I_{31} + I_{33})$$

$$S_3 = 4(I_{22} + 2I_{32} + I_{33})$$

$$S = (I_{11} + I_{22} + I_{33}) - 2(I_{21} + I_{31} - I_{32})$$

$$S_4 = I_{11} - 2I_{21} + I_{22} - I_{31} + I_{32} + j(Q_{11} + Q_{22} + Q_{31} - Q_{32})$$

$$S_5 = I_{11} - I_{21} + I_{32} - 2I_{31} + I_{33} + j(Q_{11} + Q_{21} + Q_{32} + Q_{33})$$

$$S_6 = I_{21} - I_{22} + I_{31} - 2I_{32} - I_{33} + j(Q_{21} - Q_{22} + Q_{31} - Q_{33})$$

3x3 SM MIMO CASE - PROCESING THE 4$^{TH}$ LTF 104

Channel estimator module 72 computes

$$\underline{u} = R^{-1}Q^{\cdot}h_4 \, ,$$

$$k = 1/(1 + \begin{bmatrix} 1 & -1 & 1 \end{bmatrix}\underline{u}) \, ,$$

and

$$\underline{v} = kP_1^{-1}\underline{u} \, .$$

Channel estimator module can store $\underline{v}$ in memory 75.

Channel estimator module 72 computes substream SNR based on

$$W_{ll1} = 1/(S_1 + S\|v_1\|^2 - 4real(S_4 v_1^{\cdot}))$$

$$W_{ll2} = 1/(S_2 + S\|v_2\|^2 - 4real(S_5 v_2^{\cdot}))$$

$$W_{ll3} = 1/(S_3 + S\|v_3\|^2 - 4real(S_6 v_3^{\cdot}))$$

and store the substream SNR in memory 75.

3x3 SM MIMO CASE - PROCESING DATA 92

Channel estimator module 72 can compute

$$\underline{z} = R^{-1}Q^{\cdot}y \text{ and } \mu = \begin{bmatrix} 1 & -1 & 1 \end{bmatrix}\underline{z}$$

and read $\underline{v}$ from memory 75. Channel estimator module 72 can then compute

$$\hat{\underline{x}} = P_1^{-1}\underline{z} - \mu\underline{v}$$

and read the substream SNR from memory 75. Equalizer module 76 can scale the equalized vector based on the SNRs.

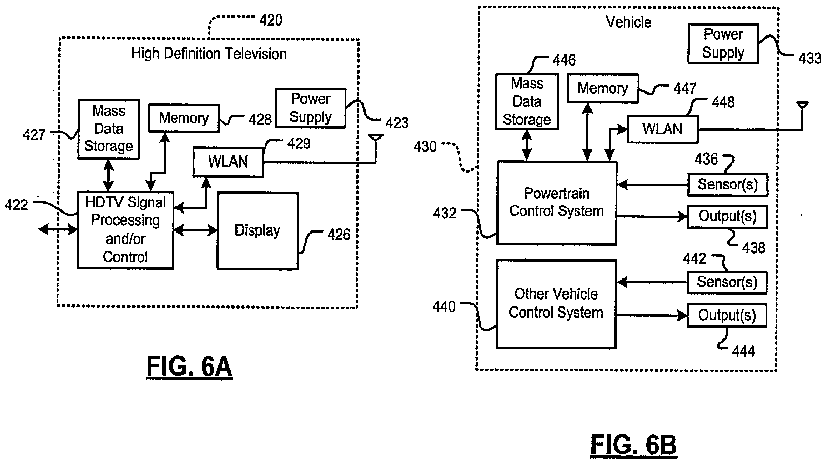

Referring now to FIGs. 6A-6E, various exemplary implementations of the receiver module are shown. Referring now to FIG. 6A, the receiver module can be implemented in a high definition television (HDTV) 420. The receiver module may implement and/or be implemented in a WLAN interface 429. The HDTV 420 receives HDTV input signals in either a wired or wireless format and generates HDTV output signals for a display 426. In some implementations, signal processing circuit and/or control circuit 422 and/or other circuits (not shown) of the HDTV 420 may process data, perform coding and/or encryption, perform calculations, format data and/or perform any other type of HDTV processing that may be required.

The HDTV 420 may communicate with mass data storage 427 that stores data in a nonvolatile manner such as optical and/or magnetic storage devices. Mass data storage 427 may include at least one hard disk drive (HDD) and/or at least one digital versatile disk (DVD) drive. The HDD may be a mini HDD that includes one or more platters having a diameter that is smaller than approximately 1.8". The HDTV 420 may be connected to memory 428 such as RAM, ROM, low latency nonvolatile memory such as flash memory and/or other suitable electronic data storage. The HDTV 420 also may support connections with a WLAN via WLAN network interface 429. The HDTV 420 also includes a power supply 423.

Referring now to FIG. 6B, the receiver module may implement and/or be implemented in a WLAN interface 448 of a vehicle 430. In some implementations WLAN interface 448 communicates with a powertrain control system 432 that receives inputs from one or more sensors. Examples of sensors includes temperature sensors, pressure sensors, rotational sensors, airflow sensors and/or any other suitable sensors and/or that generates one or more output control signals such as engine operating parameters, transmission operating parameters, and/or other control signals.

The receiver module may also be implemented in other control systems 440 of the vehicle 430. The control system 440 may likewise receive signals from input sensors 442 and/or output control signals to one or more output devices 444. In some implementations, the control system 440 may be part of an anti-lock braking system (ABS), a navigation system, a telematics system, a vehicle telematics system, a lane departure system, an adaptive cruise control system, a vehicle entertainment system such as a stereo, DVD, compact disc and the like. Still other implementations are contemplated.

The powertrain control system 432 may communicate with mass data storage 446 that stores data in a nonvolatile manner. Mass data storage 446 may include at least one HDD and/or at least one DVD drive. The HDD may be a mini HDD that includes one or more platters having a diameter that is smaller than approximately 1.8". The powertrain control system 432 may be connected to memory 447 such as RAM, ROM, low latency nonvolatile memory such as flash memory and/or other suitable electronic data storage. The powertrain control system 432 also may support connections with a WLAN via a WLAN network interface 448. The control system 440 may also include mass data storage, memory and/or a WLAN interface (all not shown). Vehicle 430 may also include a power supply 433.

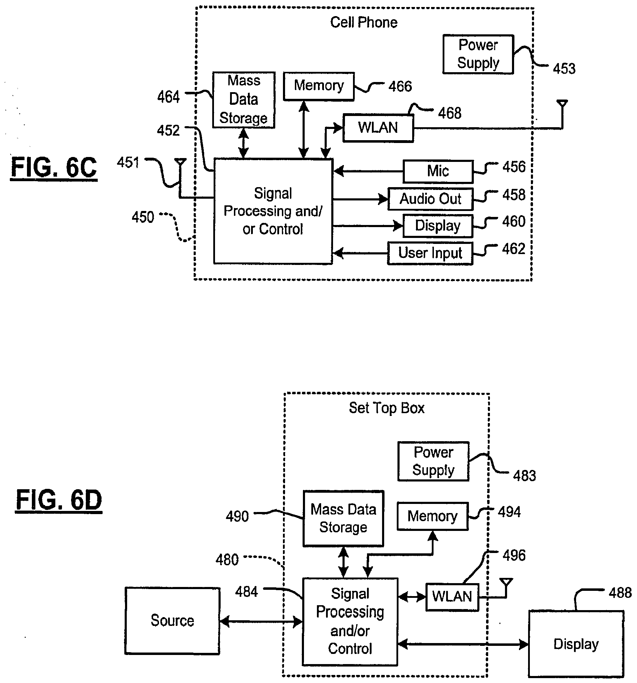

Referring now to FIG. 6C, the receiver module can be implemented in a cellular phone 450 that may include a cellular antenna 451. The receiver module may implement and/or be implemented in a WLAN interface 468. In some implementations, the cellular phone 450 includes a microphone 456, an audio output 458 such as a speaker and/or audio output jack, a display 460 and/or an input device 462 such as a keypad, pointing device, voice actuation and/or other input device. The signal processing and/or control circuits 452 and/or other circuits (not shown) in the cellular phone 450 may process data, perform coding and/or encryption, perform calculations, format data and/or perform other cellular phone functions.

The cellular phone 450 may communicate with mass data storage 464 that stores data in a nonvolatile manner. Mass data storage 450 may include at least one HDD and/or at least one DVD drive. The HDD may be a mini HDD that includes one or more platters having a diameter that is smaller than approximately 1.8". The cellular phone 450 may be connected to memory 466 such as RAM, ROM, low latency nonvolatile memory such as flash memory and/or other suitable electronic data storage. The cellular phone 450 also may support connections with a WLAN via the WLAN network interface 468. The cellular phone 450 may also include a power supply 453.

Referring now to FIG. 6D, the receiver module can be implemented in a set top box 480. The receiver module may implement and/or be implemented in a WLAN interface 496. The set top box 480 receives signals from a source such as a broadband source and outputs standard and/or high definition audio/video signals suitable for a display 488 such as a television and/or monitor and/or other video and/or audio output devices. The signal processing and/or control circuits 484 and/or other circuits (not shown) of the set top box 480 may process data, perform coding and/or encryption, perform calculations, format data and/or perform any other set top box function.

The set top box 480 may communicate with mass data storage 490 that stores data in a nonvolatile manner. Mass data storage 490 may include at least one HDD and/or at least one DVD drive. The HDD may be a mini HDD that includes one or more platters having a diameter that is smaller than approximately 1.8". The set top box 480 may be connected to memory 494 such as RAM, ROM, low latency nonvolatile memory such as flash memory and/or other suitable electronic data storage. The set top box 480 also may support connections with a WLAN via the WLAN network interface 496. The set top box 480 may include a power supply 483.

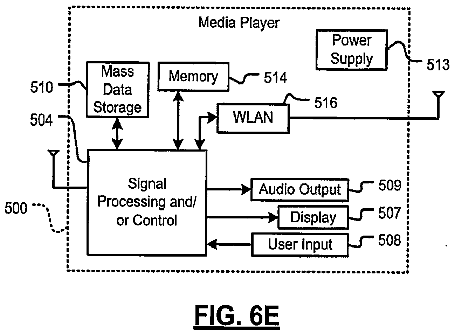

Referring now to FIG. 6E, the receiver module can be implemented in a media player 500. The receiver module may implement and/or be implemented in a WLAN interface 516. In some implementations, the media player 500 includes a display 507 and/or a user input 508 such as a keypad, touchpad and the like. In some implementations, the media player 500 may employ a graphical user interface (GUI) that typically employs menus, drop down menus, icons and/or a point-and-click interface via the display 507 and/or user input 508. The media player 500 further includes an audio output 509 such as a speaker and/or audio output jack. The signal processing and/or control circuits 504 and/or other circuits (not shown) of the media player 500 may process data, perform coding and/or encryption, perform calculations, format data and/or perform any other media player function.

The media player 500 may communicate with mass data storage 510 that stores data such as compressed audio and/or video content in a nonvolatile manner. In some implementations, the compressed audio files include files that are compliant with MP3 format or other suitable compressed audio and/or video formats. Mass data storage 510 may include at least one HDD and/or at least one DVD drive. The HDD may be a mini HDD that includes one or more platters having a diameter that is smaller than approximately 1.8". The media player 500 may be connected to memory 514 such as RAM, ROM, low latency nonvolatile memory such as flash memory and/or other suitable electronic data storage. The media player 500 also may support connections with a WLAN via the WLAN network interface 516. The media player 500 may also include a power supply 513. Still other implementations in addition to those described above are contemplated.

Those skilled in the art can now appreciate from the foregoing description that the broad teachings of the disclosure can be implemented in a variety of forms. Therefore, while this disclosure includes particular examples, the true scope of the disclosure should not be so limited since other modifications will become apparent to the skilled practitioner upon a study of the drawings, the specification and the following claims.

**Claims**

1. A receiver module (52) in a multiple input, multiple output, MIMO, communication system, comprising:

an input adapted to receive a data message (90) from a wireless communication channel, the data message having a plurality of training fields (104) and data (92), the plurality of training fields having been generated, based on training symbols (20) and a steering matrix P, prior to being transmitted to the receiver module, the steering matrix having a number of rows corresponding to the number of transmit antennas (26) and a number of columns corresponding to the number of training fields, and assuring orthogonality of the training symbols as they are transmitted from the transmit antennas;
a channel estimator module (72) adapted to:

recursively estimate a matrix $H_{est}$ based on the plurality of training fields, wherein each iteration of the recursive estimation of the matrix $H_{est}$ is performed after receiving a corresponding one of the plurality of training fields; and
recursively compute equalizer parameters based on the plurality of training fields, the steering matrix P, and a QR decomposition of the matrix $H_{est}$, the recursive computation being performed as the plurality of training fields are being received, wherein the equalizer parameters include a first set of parameters based on a first matrix, a second set of parameters based on a second matrix, and a vector $W_{\parallel} = \frac{1}{diag(PR^{-1}R^{-*}P^T)}$, each being recursively computed, wherein the first and second matrices are based on an orthogonal matrix Q and an upper triangular matrix R of a recursive QR decomposition of the matrix $H_{est}$; and

an equalizer module (76) adapted to apply coefficients to the data based on the equalizer parameters, wherein, after the recursive computation of the equalizer parameters is completed, the equalizer module:

applies the first set of parameters to a vector of the data of the data message to generate a first intermediate result;
applies the second set of parameters of the first intermediate result to generate a second intermediate result;
applies the steering matrix to the second intermediate result to generate a third intermediate result; and
applies $W_{\parallel}$ to the third intermediate result to recover user data.

2. The receiver module of Claim 1 wherein the channel estimator module begins the recursive computation upon receiving a first one of the plurality of training fields and finishes the recursive computation upon receiving a final one of the plurality of training fields.

3. The receiver module of Claim 1 further comprising a plurality of FFT modules (74) adapted to convert the data from time domain signals to frequency domain signals.

4. The receiver module of Claim 3 wherein respective outputs of the plurality of FFT modules communicate with respective inputs of the equalizer module.

5. The receiver module of Claim 4 further comprising a Viterbi decoder module (78) adapted to generate data symbols based on the frequency domain signals communicated from an output of the equalizer module.

6. The receiver module of Claim 1 wherein the plurality of training fields are compliant with IEEE 802.11n.

7. A transceiver module (80) comprising the receiver module of Claim 1 and further comprising a transmitter module.

8. The transceiver module of Claim 7 wherein the transmitter module generates training symbols to be included in the plurality of training fields and includes a multiplier module (22) adapted to multiply the training symbols by the steering matrix P.

9. The transceiver module of Claim 8 wherein the steering matrix P has a condition number equal to 1.

10. The transceiver module of Claim 7 further comprising:

> N receive antennas adapted to receive the data message, wherein N is an integer greater than or equal to 2; and N transmit antennas adapted to transmit the data message over N streams.

11. The receiver module of Claim 1 wherein the first matrix is based on a conjugate transpose of an orthogonal matrix of the QR decomposition, and wherein the second matrix is based on an inverse of an upper triangular matrix of the QR decomposition.

**Patentansprüche**

1. Empfängermodul (52) in einem MIMO (Multiple-Input-Multiple-Output)-Kommunikationssystem, umfassend einen Eingang, der ausgebildet ist zum Empfangen einer Datennachricht (90) von einem drahtlosen Kommunikationskanal, wobei die Datennachricht eine Vielzahl von Trainingsfeldern (104) und Daten (92) aufweist, wobei die Vielzahl von Trainingsfeldern basierend auf Trainingssymbolen (20) und einer Lenkungsmatrix P vor dem Senden an das Empfängermodul erzeugt wurden, wobei die Lenkungsmatrix eine Anzahl von Reihen in Entsprechung zu der Anzahl von Sendeantennen (26) und eine Anzahl von Spalten in Entsprechung zu der Anzahl von Trainingsfeldern aufweist und eine Orthogonalität der Trainingssymbole sicherstellt, wenn diese von den Sendeantennen gesendet werden,
ein Kanalschätzungsmodul (72), das ausgebildet ist zum:

> rekursiven Schätzen einer Matrix $H_{est}$ basierend auf einer Vielzahl von Trainingsfeldern, wobei jede Wiederholung der rekursiven Schätzung der Matrix $H_{est}$ durchgeführt wird, nachdem ein entsprechendes aus der Vielzahl von Trainingsfeldern empfangen wurde, und
> rekursives Berechnen von Ausgleichsparametern basierend auf der Vielzahl von Trainingsfeldern, der Lenkungsmatrix P und einer QR-Dekomposition der Matrix $H_{est}$, wobei die rekursive Berechnung durchgeführt wird, wenn die Vielzahl von Trainingsfeldern empfangen werden, wobei die Ausgleichsparameter einen ersten Satz von Parametern basierend auf einer ersten Matrix, einen zweiten Satz von Parametern basierend auf einer zweiten Matrix und einen Vektor $W_{II} = \dfrac{1}{diag(PR^{-1}R^{-*}P^{T})}$ umfassen, die jeweils rekursiv berechnet werden, wobei die ersten und zweiten Matrizen auf einer orthogonalen Matrix Q und einer oberen dreieckigen Matrix R einer rekursiven QR-Dekomposition der Matrix $H_{est}$ basieren, und

ein Ausgleichsmodul (76), das ausgebildet ist zum Anwenden von Koeffizienten auf die Daten basierend auf den Ausgleichsparametern, wobei, nachdem die rekursive Berechnung der Ausgleichsparameter abgeschlossen ist, das Ausgleichsmodul:

> den ersten Satz von Parametern auf einen Vektor der Daten der Datennachricht anwendet, um ein erstes Zwischenergebnis zu erzeugen,
> den zweiten Satz von Parametern des ersten Zwischenergebnisses anwendet, um ein zweites Zwischenergebnis zu erzeugen,
> die Lenkungsmatrix auf das zweite Zwischenergebnis anwendet, um ein drittes Zwischenergebnis zu erzeugen, und
> $W_{II}$ auf das dritte Zwischenergebnis anwendet, um Benutzerdaten wiederherzustellen.

2. Empfängermodul nach Anspruch 1, wobei das Kanalschätzungsmodul die rekursive Berechnung beginnt, wenn es ein erstes aus der Vielzahl von Trainingsfeldern empfängt, und die rekursive Berechnung abschließt, wenn es ein letztes aus der Vielzahl von Trainingsfeldern empfängt.

3. Empfängermodul nach Anspruch 1, das weiterhin eine Vielzahl von FET-Modulen (74) umfasst, die ausgebildet sind zum Wandeln der Daten von Zeitdomänensignalen zu Frequenzdomänensignalen.

4. Empfängermodul nach Anspruch 3, wobei die entsprechenden Ausgänge der Vielzahl von FFT-Modulen mit entsprechenden Eingängen des Ausgleichsmoduls kommunizieren.

5. Empfängermodul nach Anspruch 4, das weiterhin ein Viterbi-Deocodiermodul (78) umfasst, das ausgebildet ist zum Erzeugen von Datensymbolen basierend auf den Frequenzdomänensignalen, die von einem Ausgang des Ausgleichsmoduls kommuniziert werden.

6. Empfängermodul nach Anspruch 1, wobei die Vielzahl von Trainingsfeldern mit IEEE 802.11n kompatibel sind.

7. Sendeempfängermodul (80), das das Empfängermodul von Anspruch 1 und weiterhin ein Sendermodul umfasst.

8. Sendeempfängermodul nach Anspruch 7, wobei das Sendermodul Trainingssymbole für das Einfügen in die Vielzahl von Trainingsfeldern erzeugt und ein Multiplikationsmodul (22) enthält, das ausgebildet ist zum Multiplizieren der Trainingssymbole mit der Lenkungsmatrix P.

9. Sendeempfängermodul nach Anspruch 8, wobei die Lenkungsmatrix P eine Bedingungszahl gleich 1 aufweist.

10. Sendeempfängermodul nach Anspruch 7, das weiterhin umfasst:

N Empfangsantennen, die ausgebildet sind zum Empfangen der Datennachricht, wobei N eine Ganzzahl größer oder gleich 2 ist, und
N Sendeantennen, die ausgebildet sind zum Senden der Datennachricht über N Ströme.

11. Empfängermodul nach Anspruch 1, wobei die erste Matrix auf einer konjugierten Transponierten einer orthogonalen Matrix der QR-Dekomposition basiert und wobei die zweite Matrix auf einer Umkehrung einer oberen dreieckigen Matrix der QR-Dekomposition basiert.

**Revendications**

1. Module récepteur (52) dans un système de communication à entrées multiples sorties multiples, soit MIMO (*multiple input, multiple output*), comprenant :

une entrée conçue pour recevoir un message de données (90) d'un canal de communication sans fil, le message de données comportant une pluralité de champs d'apprentissage (104) et de données (92), la pluralité de champs d'apprentissage ayant été générés, à partir de symboles d'apprentissage (20) et d'une matrice de pilotage P, avant d'être transmis au module récepteur, la matrice de pilotage ayant un nombre de rangées qui correspond au nombre d'antennes émettrices (26) et un nombre de colonnes qui correspond au nombre de champs d'apprentissage, et assurant l'orthogonalité des symboles d'apprentissage lorsqu'ils sont émis par les antennes émettrices ;
un module d'estimation de canal (72) conçu pour :

estimer récursivement une matrice $H_{est}$ sur la base de la pluralité de champs d'apprentissage, dans lequel chaque itération de l'estimation récursive de la matrice $H_{est}$ est réalisée après réception d'un champ correspondant de la pluralité de champs d'apprentissage ; et
calculer récursivement des paramètres égalisateurs sur la base de la pluralité de champs d'apprentissage, de la matrice de pilotage P et d'une décomposition QR de la matrice $H_{est}$, le calcul récursif étant réalisé à mesure que la pluralité de champs d'apprentissage est reçue, dans lequel les paramètres égalisateurs comprennent un premier ensemble de paramètres basés sur une première matrice, un second ensemble de paramètres basés sur une seconde matrice et un vecteur $W_{II} = \dfrac{1}{diag(PR^{-1}R^{-*}p^T)}$, chacun faisant l'objet d'un calcul récursif,
dans lequel les première et seconde matrices sont basées sur une matrice orthogonale Q et une matrice triangulaire supérieure R d'une décomposition QR récursive de la matrice $H_{est}$ ; et
un module égaliseur (76) conçu pour appliquer des coefficients aux données sur la base des paramètres égalisateurs, dans lequel, une fois que le calcul récursif des paramètres égalisateurs est terminé, le module égalisateur :

applique le premier ensemble de paramètres à un vecteur des données du message de données pour générer un premier résultat intermédiaire ;

applique le second ensemble de paramètres au premier résultat intermédiaire pour générer un deuxième résultat intermédiaire ;

appliquer la matrice de pilotage au deuxième résultat intermédiaire pour générer un troisième résultat intermédiaire ; et

applique $W_{\parallel}$ au troisième résultat intermédiaire pour récupérer des données d'utilisateur.

2. Module récepteur selon la revendication 1, dans lequel le module d'estimation de canal commence le calcul récursif à la réception d'un premier champ de la pluralité de champs d'apprentissage et termine le calcul récursif à la réception d'un champ final de la pluralité de champs d'apprentissage.

3. Module récepteur selon la revendication 1, comprenant, en outre, une pluralité de modules FFT (74) conçus pour convertir les données de signaux de domaine temporel en signaux de domaine fréquentiel.

4. Module récepteur selon la revendication 3, dans lequel des sorties respectives de la pluralité de modules FFT communiquent avec des entrées respectives du module égalisateur.

5. Module récepteur selon la revendication 4, comprenant, en outre, un module décodeur de Viterbi (78) conçu pour générer des symboles de données sur la base des signaux de domaine fréquentiel communiqués depuis une sortie du module égalisateur.

6. Module récepteur selon la revendication 1, dans lequel la pluralité de champs d'apprentissage est conforme à l'IEEE 802.11n.

7. Module émetteur-récepteur (80) comprenant le module récepteur selon la revendication 1 et comprenant, en outre, un module émetteur.

8. Module émetteur-récepteur selon la revendication 7, dans lequel le module émetteur génère des symboles d'apprentissage destinés à être inclus dans la pluralité de champs d'apprentissage et comprend un module multiplicateur (22) conçu pour multiplier les symboles d'apprentissage par la matrice de pilotage P.

9. Module émetteur-récepteur selon la revendication 8, dans lequel la matrice de pilotage P a un numéro d'état égal à 1.

10. Module émetteur-récepteur selon la revendication 7, comprenant, en outre :

N antennes réceptrices conçues pour recevoir le message de données, dans lequel N est un nombre entier supérieur ou égal à 2 ; et

N antennes émettrices conçues pour émettre le message de données sur N flux.

11. Module récepteur selon la revendication 1, dans lequel la première matrice est basée sur une transposition conjuguée d'une matrice orthogonale de la décomposition QR et dans lequel la seconde matrice est basée sur un inverse d'une matrice triangulaire supérieure de la décomposition QR.

**FIG. 1**
Prior Art

**FIG. 2**

EP 1 974 512 B1

**FIG. 3**

**FIG. 4**

**FIG. 5**

EP 1 974 512 B1

**FIG. 6A**

**FIG. 6B**

## FIG. 6C

**Cell Phone**

Power Supply — 453

464 — Mass Data Storage

Memory — 466

452 —

WLAN — 468

451 —

450 —

Signal Processing and/ or Control

Mic — 456

Audio Out — 458

Display — 460

User Input — 462

## FIG. 6D

**Set Top Box**

Power Supply — 483

490 — Mass Data Storage

Memory — 494

480 —

484 —

Source

Signal Processing and/or Control

WLAN — 496

Display — 488

EP 1 974 512 B1

**FIG. 6E**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005185738 A1
- US 2005249303 A1
- EP 1566917 A

### Non-patent literature cited in the description

- **LOK TIING TIE et al.** Decoupled Maximum Likelihood Multiuser Channel Estimation for Asynchronous DS-CDMA System. *IEEE International Symposium on Spread Spectrum Techniques and Applications,* 30 August 2004, 92-96